# EUROPEAN PATENT APPLICATION

(11) **EP 4 517 527 A1**
(43) Date of publication of application: **05.03.2025**
(21) Application number: 22942464.3
(22) Date of filing: 22.11.2022
(51) Int. Cl.: G06F 9/50

(54) **RESOURCE MANAGEMENT METHOD AND RELATED APPARATUS**

(30) Priority: 17.05.2022 CN 202210536539
(71) Applicant: Huawei Cloud Computing Technologies Co., Ltd., Gui'an New District, Guizhou 550025 (CN)
(72) Inventor: CHEN, Pu, Guizhou 550025 (CN)
(74) Representative: Huawei European IPR
(86) International application number: PCT/CN2022/133401
(87) International publication number: WO 2023/221444

(57) **Abstract**

Embodiments of this application disclose a cloud resource management method and a related apparatus, to improve resource utilization of a cloud server. The method in embodiments of this application includes: obtaining available resource status information of a cloud server cluster, where the available resource status information includes one or more of the following: available cloud resource capacities and available cloud resource flavors of the cloud server cluster in different future periods; generating cloud service price information based on the available resource status information, where the cloud service price information includes price information of cloud resources of a plurality of flavors; and sending the cloud service price information to user equipment.

## Description

This application claims priority to Chinese Patent Application No. 202210536539.3, filed with the China National Intellectual Property Administration on May 17, 2022 and entitled "RESOURCE MANAGEMENT METHOD AND RELATED APPARATUS", which is incorporated herein by reference in its entirety.

### TECHNICAL FIELD

Embodiments of this application relate to the computer field, and in particular, to a resource management method and a related apparatus.

### BACKGROUND

With development of cloud computing technologies, a cloud service provider connects a large quantity of computing resources over a network to form a huge resource pool, to provide a cloud service for user equipment. The user equipment manages and schedules the computing resources in the resource pool through a resource management server.

Currently, in a cloud resource transaction process between the user equipment and the cloud service provider, the user equipment sends a cloud resource application to the resource management server. The cloud resource application includes flavors of computing resources, for example, a quantity of processor cores and a memory size. The cloud service provider provides corresponding price information for the user equipment based on usage of cloud resources in the current resource pool. The user equipment chooses to subscribe to a cloud service based on the price information provided by the cloud service provider.

Currently, the cloud service provider provides price information for the user equipment based only on status information of available resources in the resource pool at a resource application moment of the user equipment. However, the status information of the available resources in the resource pool changes with user equipment used at different moments. Consequently, the price information provided by the cloud service provider is inaccurate in the current transaction manner, which further causes a waste of computing resources in the resource pool.

### SUMMARY

Embodiments of this application provide a resource management method and a related apparatus, to improve cloud resource utilization.

A first aspect in embodiments of this application provides a resource management method. The method may be performed by a management server, or may be performed by a component of the management server, for example, a processor, a chip, or a chip system of the management server, or may be implemented by a logical module or software that can implement all or some functions of the management server. Performing by the management server is used as an example. The resource management method provided in the first aspect in embodiments of this application includes: The management server obtains available resource status information of a cloud server cluster. The available resource status information includes one or more of the following: available cloud resource capacities and available cloud resource flavors of the cloud server cluster in different future periods. The available cloud resource capacity includes quantities of available virtual machines, physical hosts, or containers in the future period. The available cloud resource flavor includes a processor core number, a memory size, or a graphics card model. The management server generates cloud service price information based on the available resource status information. The cloud service price information includes price information of cloud resources of one or more flavors in the different future periods. The management server sends the cloud service price information to user equipment.

In this embodiment of this application, the management server can obtain available cloud resource status information of the cloud server cluster in the future period, and generate a corresponding cloud service price based on the available cloud resource status information. The cloud service price is a price obtained through calculation based on available cloud resource types and the available cloud resource capacities in the different future periods. Therefore, the cloud service price can accurately reflect whether available cloud resources are sufficient. This is more conducive to sale of the cloud resource, thereby improving utilization of the cloud resource in a cloud server.

In a possible implementation, before the management server obtains the available resource status information of the cloud server cluster, the management server receives plan information sent by the user equipment. The plan information is used to provide a cloud resource requirement plan of the user equipment for the management server. The plan information includes one or more of the following information: a cloud resource period requirement or a cloud resource flavor requirement. In a process in which the management server generates the cloud service price information based on the available resource status information, the management server generates the cloud service price information based on the plan information and the available resource status information. The cloud service price information is cloud service price information corresponding to the plan information.

In this embodiment of this application, the management server receives the plan information submitted by the user equipment, and generates, based on the plan information submitted by the user equipment and an available resource status, the cloud service price corresponding to the plan information. The user equipment submits a cloud resource capacity requirement and the cloud resource flavor requirement in the future period in advance. Therefore, the management server can provide a more accurate cloud service price based on the plan information, further improving cloud resource utilization.

In a possible implementation, the available cloud resource flavor in the available resource status information is consistent with the flavor requirement in the plan information. The management server determines a cloud resource of a corresponding flavor based on the flavor requirement in the plan information submitted by the user equipment.

In this embodiment of this application, the available cloud resource flavor provided by the management server is consistent with the flavor requirement in the plan information, so that the available cloud resource flavor meets the flavor requirement in the plan information, improving implementability of the manner.

In a possible implementation, in a process in which the management server generates the cloud service price information based on the plan information and the available resource status information, when the available resource status information meets the plan information, and the available cloud resource capacity in the available resource status information is greater than or equal to a target threshold, the management server generates cloud service discount information.

In this embodiment of this application, the management server may provide a cloud service discount price for the user equipment that submits the plan information in advance, improving cloud resource utilization.

In a possible implementation, after the management server sends the cloud service price information to the user equipment, the management server receives subscription information sent by the user equipment. The subscription information is used to confirm the cloud service price information corresponding to the plan information.

In this embodiment of this application, after sending the cloud service price information to the user equipment, the management server receives a subscription request corresponding to the plan information sent by the user equipment, improving implementability of the solution.

In a possible implementation, before the management server sends the cloud service price information to the user equipment, the management server receives a query request sent by the user equipment. The management server sends the available resource status information and the cloud service price information to the user equipment based on the query request. The management server sends the available cloud resource flavor and the available cloud resource capacity in the future period, and the corresponding price to a user. The user equipment selects a period, a cloud resource flavor, and a cloud resource capacity corresponding to a resource that needs to be subscribed to.

In this embodiment of this application, the management server may send, based on the query request sent by the user equipment, the available resource status information in the future period and the corresponding cloud service price information to the user equipment. The user equipment selects a cloud resource period requirement, a cloud resource flavor, and a cloud resource capacity corresponding to a resource that needs to be subscribed to, improving cloud resource utilization.

In a possible implementation, after the management server sends the available resource status information and the cloud service price information to the user equipment based on the query request, the management server receives subscription information sent by the user equipment. The subscription information includes a cloud resource of at least one flavor selected by the user equipment and a price of the cloud resource of the at least one flavor.

In this embodiment of this application, after sending the available resource status information and the cloud service price information to the user equipment, the management server receives a cloud resource period requirement, a cloud resource flavor, and a cloud resource capacity corresponding to a resource that the user equipment selects, improving implementability of the solution.

In a possible implementation, in a process in which the management server obtains the available resource status information of the cloud server cluster, the management server obtains scheduling information of the cloud server cluster. The scheduling information includes one or more of the following information: a submitted cloud resource plan, a cloud resource plan predicted based on a historical cloud resource change, a to-be-reserved idle cloud resource plan, a total cloud resource plan, a maximum cloud resource plan of a single device, and an in-use cloud resource continuation plan. The management server generates the available resource status information of the cloud server cluster based on the scheduling information. Specifically, the submitted cloud resource plan, the cloud resource plan predicted based on a historical cloud resource change, the to-be-reserved idle cloud resource plan, and the in-use cloud resource continuation plan are subtracted from the total cloud resource plan, so that the management server may obtain available cloud resource capacities in different periods.

In this embodiment of this application, the management server may periodically obtain the scheduling information of the cloud server cluster, and obtain through calculation the available resource status information based on the scheduling information, improving accuracy of the available resource status information.

A second aspect in embodiments of this application provides a resource management apparatus. The resource management apparatus includes a transceiver unit and a processing unit. The transceiver unit is configured to obtain available resource status information of a cloud server cluster. The available resource status information includes one or more of the following: available cloud resource capacities and available cloud resource flavors of the cloud server cluster in different future periods. The processing unit is configured to generate cloud service price information based on the available resource status information. The cloud service price information includes price information of cloud resources of a plurality of flavors. The transceiver unit is further configured to send the cloud service price information to user equipment.

In a possible implementation, the transceiver unit is further configured to receive plan information sent by the user equipment. The plan information is used to provide a cloud resource requirement plan of the user equipment for a management server. The plan information includes one or more of the following information: a cloud resource period requirement or a cloud resource flavor requirement. The processing unit is specifically configured to generate the cloud service price information based on the plan information and the available resource status information.

In a possible implementation, the available cloud resource flavor in the available resource status information is consistent with the flavor requirement in the plan information.

In a possible implementation, the processing unit is specifically configured to: when the available resource status information meets the plan information, and the available cloud resource capacity in the available resource status information is greater than or equal to a target threshold, generate cloud service discount information.

In a possible implementation, the transceiver unit is further configured to receive subscription information sent by the user equipment. The subscription information is used to confirm the cloud service price information corresponding to the plan information.

In a possible implementation, the transceiver unit is further configured to receive a query request sent by the user equipment. The processing unit is further configured to send the available resource status information and the cloud service price information to the user equipment based on the query request.

In a possible implementation, the transceiver unit is further configured to receive subscription information sent by the user equipment. The subscription information includes a cloud resource of at least one flavor selected by the user equipment and a price of the cloud resource of the at least one flavor.

In a possible implementation, the transceiver unit is further configured to obtain scheduling information of the cloud server cluster. The scheduling information includes one or more of the following information: a submitted cloud resource plan, a cloud resource plan predicted based on a historical cloud resource change, a to-be-reserved idle cloud resource plan, a total cloud resource plan, a maximum cloud resource plan of a single device, and an in-use cloud resource continuation plan. The processing unit is further configured to generate the available resource status information of the cloud server cluster based on the scheduling information.

A third aspect in embodiments of this application provides a management server, including a processor. The processor is coupled to a memory. The processor is configured to store instructions. When the instructions are executed by the processor, the management server is enabled to perform the method according to the first aspect or any one of the possible implementations of the first aspect.

A fourth aspect in embodiments of this application provides a computer-readable storage medium. The computer-readable storage medium stores instructions. When the instructions are executed, a computer is enabled to perform the method according to the first aspect or any one of the possible implementations of the first aspect.

A fifth aspect in embodiments of this application provides a computer program product. The computer program product includes instructions. When the instructions are executed, a computer is enabled to implement the method according to the first aspect or any one of the possible implementations of the first aspect.

It may be understood that, for beneficial effects that can be achieved by any resource management apparatus, management server, computer-readable medium, computer program product, or the like provided above, refer to beneficial effects in a corresponding method. Details are not described herein again.

### BRIEF DESCRIPTION OF DRAWINGS

FIG. 1 is a diagram of a system architecture of a cloud resource scheduling system according to an embodiment of this application;
FIG. 2 is a schematic flowchart of a resource management method according to an embodiment of this application;
FIG. 3 is a diagram of a cloud resource scheduling plan according to an embodiment of this application;
FIG. 4a is a schematic flowchart of another resource management method according to an embodiment of this application;
FIG. 4b is a diagram of a UI interface of a management server according to an embodiment of this application;
FIG. 5 is a schematic flowchart of another resource management method according to an embodiment of this application;
FIG. 6 is a diagram of a structure of a resource management apparatus according to an embodiment of this application; and
FIG. 7 is a diagram of a structure of a management server according to an embodiment of this application.

### DESCRIPTION OF EMBODIMENTS

Embodiments of this application provide a resource management method and a related apparatus, to improve resource utilization of a cloud server.

In the specification, claims, and accompanying drawings of this application, terms "first", "second", "third", "fourth", and the like (if any) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include", "contain" and any variant thereof are intended to cover a non-exclusive inclusion. For example, a process, method, system, product, or device that includes a list of steps or units is not necessarily limited to those steps or units that are expressly listed, but may include other steps or units not expressly listed or are inherent to the process, method, product, or device.

In embodiments of this application, the word such as "example" or "for example" is used to represent an example, an illustration, or a description. Any embodiment or design solution described by "example" or "for example" in embodiments of this application should not be construed as being more preferred or advantageous than another embodiment or design solution. To be precise, the word such as "example" or "for example" is intended to present a related concept in a specific manner.

The following describes a resource management method and a related apparatus provided in embodiments of this application with reference to the accompanying drawings.

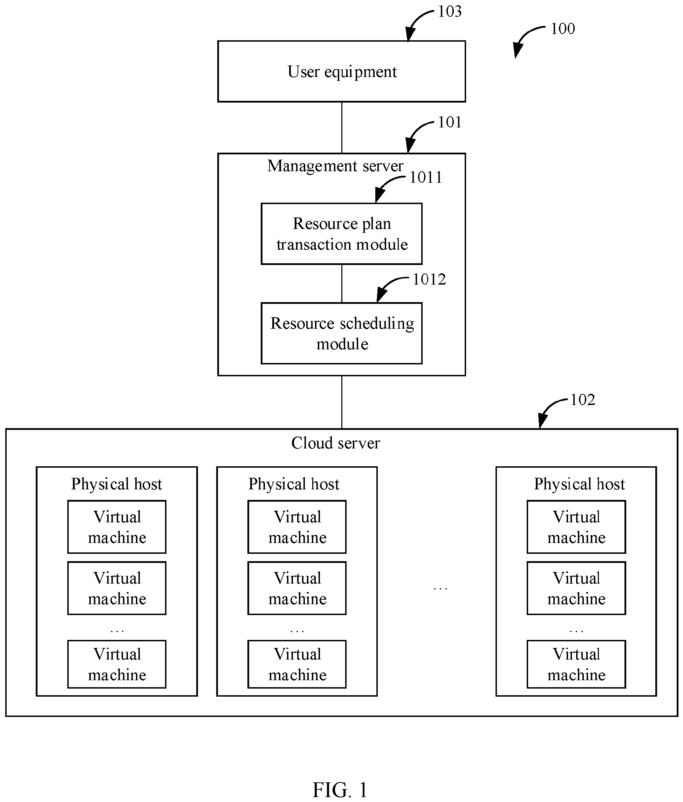

FIG. 1 is a diagram of a system architecture of a cloud resource scheduling system according to an embodiment of this application. As shown in FIG. 1, the cloud resource scheduling system 100 includes a management server 101, a cloud server 102, and user equipment 103. The user equipment 103 is connected to the cloud server 102 through the management server 101. The following specifically describes a function of each part in the cloud resource scheduling system 100.

The management server 101 is configured to manage and schedule cloud resources provided by the cloud server 102, including: collecting resource statuses of all physical hosts in the cloud server 102, scheduling a new cloud resource application sent by the user equipment 103, and providing cloud service price information for the user equipment 103.

The management server 101 includes a resource plan transaction module 1011 and a resource scheduling module 1012. The resource plan transaction module 1011 is configured to calculate whether available resource status information of the cloud server 102 meets a cloud resource application requirement of the user equipment 103, and generate the cloud service price information based on the available resource status information. The resource scheduling module 1012 is configured to obtain the available resource status information of the cloud server 102, and schedule the cloud resources provided by the cloud server 102.

In some possible implementations, the management server 101 can further externally provide an operable UI interface and an application programming interface API that can be invoked. The management server 101 can further provide a transaction service for externally providing the cloud resource in the cloud server 102. The management server 101 may be, for example, OpenStack or VMware.

The cloud server 102 is configured to provide the cloud resources for the user equipment 103. The cloud server 102 includes a plurality of physical hosts, and a plurality of virtual machines are deployed on each physical host. The cloud resources provided by the cloud server 102 include a physical host, a virtual machine, and a container. The cloud server 102 provides available cloud resources for the user equipment 103 based on a scheduling plan of the management server 101. It may be understood that a plurality of cloud servers 102 also form a cloud server cluster, and the server cluster provides the cloud service for the user equipment 103.

The user equipment 103 is configured to request the cloud resources from the management server 101. Specifically, the user equipment 103 may send a cloud resource request to the management server 101 based on the UI interface or a Web UI interface provided by the management server 101, or may send a resource request to the management server 101 by using application software of the user equipment 103. This is not specifically limited.

The following uses the system architecture shown in FIG. 1 as an example to describe a resource management method provided in embodiments of this application.

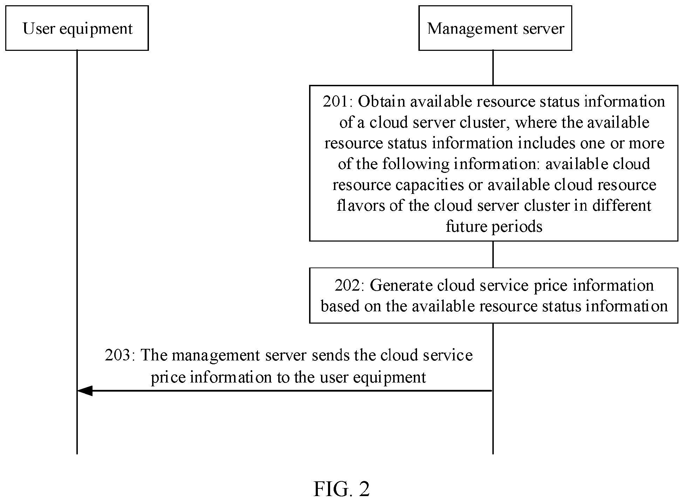

FIG. 2 is a schematic flowchart of a resource management method according to an embodiment of this application. As shown in FIG. 2, the resource management method provided in this embodiment of this application includes but is not limited to the following steps.

201: A management server obtains available resource status information of a cloud server cluster, where the available resource status information includes one or more of the following information: available cloud resource capacities and available cloud resource flavors of the cloud server cluster in different future periods.

The management server obtains the available resource status information of the cloud server cluster, where the available resource status information includes one or more of the following information: the available cloud resource capacities and the available cloud resource flavors of a cloud server cluster in the different future periods. In this embodiment of this application, cloud resources include virtual machines, physical hosts, and containers. Each type of cloud resources has different flavors. For example, flavors of the virtual machine include a quantity of processor cores, a memory size, and a graphics card model. The available cloud resource capacity includes quantities of virtual machines, physical hosts, and containers that can be provided by the cloud server cluster for user equipment for use.

Specifically, in a process in which the management server obtains the available resource status information of the cloud server cluster, a plan transaction module of the management server queries scheduling information from a resource scheduling module. The plan transaction module of the management server generates the available resource status information of the cloud server cluster based on the scheduling information. The scheduling information of the cloud server cluster includes one or more of the following information: a submitted cloud resource plan, a cloud resource plan predicted based on a historical cloud resource change, a to-be-reserved idle cloud resource plan, a total cloud resource plan, a maximum cloud resource plan of a single device, and an in-use cloud resource continuation plan.

The submitted cloud resource plan includes a cloud resource capacity requirement and a cloud resource flavor requirement of the user equipment in a future period. The user equipment includes user equipment that has submitted plan information but has not completed subscription and other user equipment that has submitted plan information and completed subscription.

The cloud resource plan predicted based on the historical cloud resource change refers to a plan for a cloud resource usage change in a future period, where the plan is predicted by the management server based on historical cloud resource usage.

The to-be-reserved idle cloud resource plan refers to a cloud resource that the management server plans to reserve to cope with an unexpected cloud resource use requirement. The to-be-reserved idle resource includes a resource application of possible new user equipment from current time to plan application start time, or a newly added resource application of existing user equipment after plan application start time.

The total cloud resource application plan refers to a maximum cloud resource capacity that can be planned and provided by the cloud server cluster, including a maximum resource capacity that can be provided for each resource type in different resource types.

The maximum cloud resource plan of the single device refers to a cloud resource plan set by the management server for a maximum cloud resource capacity that can be allocated to single user equipment. The in-use cloud resource continuation plan refers to a cloud resource plan reserved by the management server for the user equipment for in-use cloud resource continuation.

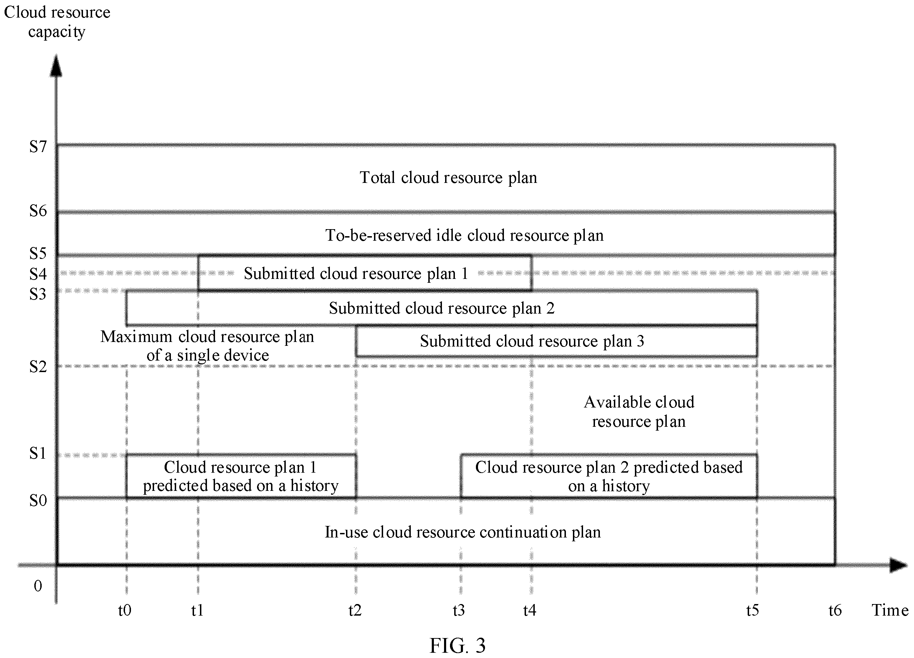

FIG. 3 is a diagram in which a cloud resource capacity of a cloud server cluster changes with time according to an embodiment of this application. In an example shown in FIG. 3, it may be learned from a plan allocation status for a cloud resource capacity in a period 0 to t6 that, a total cloud resource capacity of the cloud server cluster at each moment in the period 0 to t6 is S7, an idle cloud resource capacity that is to be reserved by the cloud server cluster at each moment in the period 0 to t6 is S6-S5, and a cloud resource capacity in an in-use cloud resource plan at each moment in the period 0 to t6 is S0. At each moment in a period t1 to t4, a cloud resource capacity in a cloud resource plan 1 submitted by the user equipment is S5-S3. At each moment in a period t0 to t2, a cloud resource capacity in a cloud resource plan 1 predicted based on a historical cloud resource change is S1-S0. At each moment in a period t3 to t5, a cloud resource capacity in a cloud resource plan 2 predicted based on a historical cloud resource change is S1-S0.

It can be learned from the example shown in FIG. 3 that, a cloud resource capacity in a maximum cloud resource plan of a single device at each moment in the period 0 to t6 is S3-S2. The cloud resource capacity in the maximum cloud resource plan of the single device means a maximum cloud resource capacity that can be allocated by the management server to single user equipment. In the figure, none of the resource plan 1 submitted by the user equipment, a resource plan 2 submitted by the user equipment, and a resource plan 3 submitted by the user equipment can exceed the maximum resource capacity of the single device.

In the example shown in FIG. 3, the management server may further obtain available cloud resource capacities of the cloud server cluster in different periods through calculation based on cloud resource plans in different periods. For example, an available cloud resource plan can be obtained by subtracting the to-be-reserved idle cloud resource plan, the submitted cloud resource plan 1, the submitted cloud resource plan 2, the submitted cloud resource plan 3, the cloud resource plan 1 predicted based on the historical cloud resource change, the cloud resource plan 2 predicted based on the historical cloud resource change, and the in-use cloud resource continuation plan from the total cloud resource application plan in FIG. 3. The available cloud resource plan may indicate available cloud resource capacities in different future periods. It can be learned from the example shown in FIG. 3 that, in a period 0 to t0 and a period t5 to t6, the available cloud resource capacity reaches a maximum value.

It should be noted that, in the example shown in FIG. 3, cloud resource capacities in the to-be-reserved idle cloud resource plan, the submitted cloud resource plan, the cloud resource plan predicted based on the historical cloud resource change, and the in-use cloud resource continuation plan do not change within a period. In another example in this application, the cloud resource capacities in these plans may alternatively change within the period. For example, the cloud resource capacities in these plans increase or decrease over time within the period.

In addition, the example shown in FIG. 3 is merely a cloud resource plan for a specific cloud resource type in a future period. For different cloud resource types, each cloud resource type has a corresponding cloud resource plan. The management server may calculate available cloud resource plans for different cloud resource types based on the cloud resource plan in the future period.

In this embodiment of this application, the management server may periodically obtain the available resource status information of the cloud server cluster. Alternatively, the management server may be triggered, based on a cloud resource request of the user equipment, to obtain the available resource status information of the cloud server cluster. This is not specifically limited.

202: The management server generates cloud service price information based on the available resource status information.

After obtaining the available resource status information, the management server generates the cloud service price information based on the available resource status information. Specifically, the management server may generate cloud service price information in different periods based on the available cloud resource capacities in the different periods in the available resource status information. When an available cloud resource capacity in a specific period is abundant, the management server may generate cloud service discount information in the period.

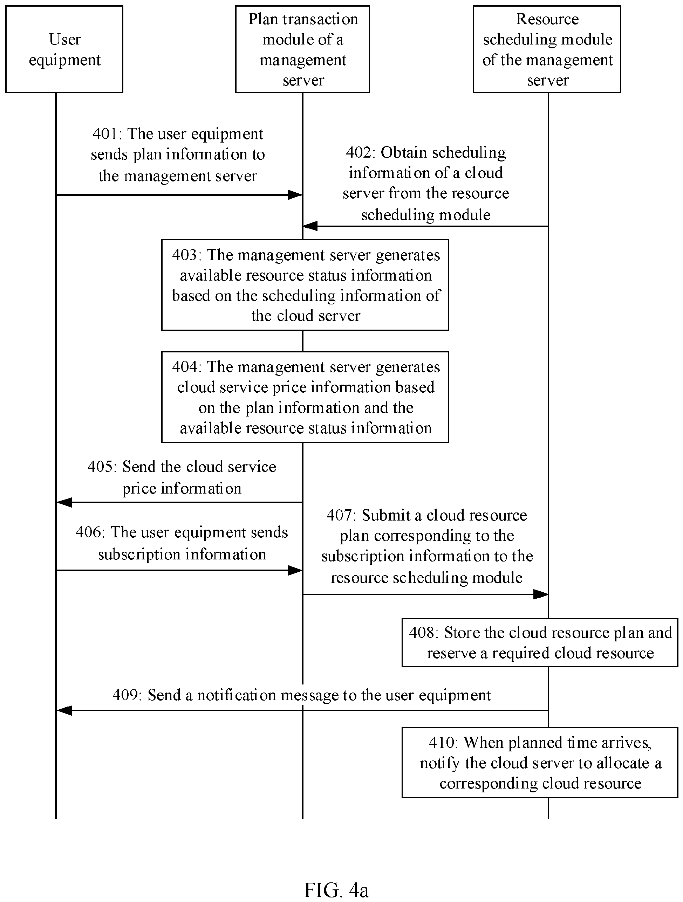

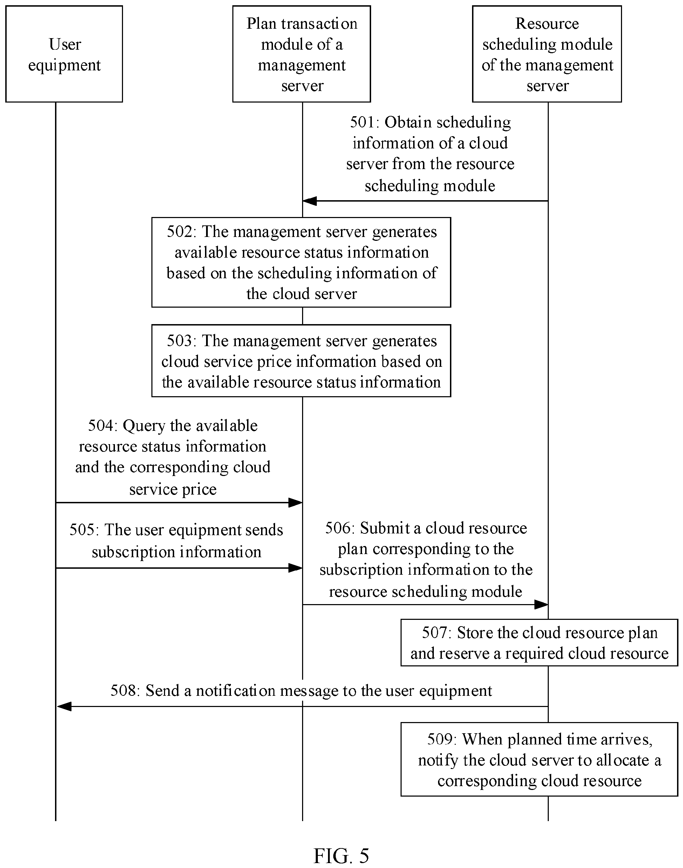

In this embodiment of this application, in a process in which the management server generates the cloud service price information based on the available resource status information, the management server may generate, based on plan information submitted by the user equipment and the available resource status information, the cloud service price information corresponding to the plan information, or may send the available resource status information and the corresponding cloud service price information to the user equipment for selection by the user equipment. This is not specifically limited. The foregoing two manners are separately described in subsequent embodiments shown in FIG. 4a and FIG. 5.

It may be understood that the management server may generate different cloud service discount information for different user equipment. For example, in a scenario in which the user equipment submits the plan information, the management server may generate different discount information based on a total cloud resource requirement quantity of the user equipment. For another example, the management server may generate different discount information for different user levels.

203: The management server sends the cloud service price information to the user equipment.

The management server sends the cloud service price information to the user equipment. After receiving the cloud service price information sent by the management server, the user equipment sends subscription information to the management server. The subscription information is used to confirm the cloud service price information. The management server reserves, for the user equipment based on the subscription information, a cloud resource corresponding to the subscription information.

In this embodiment of this application, the management server can obtain the available cloud resource status information of the cloud server cluster in the future period, and generate a corresponding cloud service price based on the available cloud resource status information. The cloud service price is a price obtained through calculation based on available cloud resource types and available cloud resource capacities in different future periods. Therefore, the cloud service price can accurately reflect whether available cloud resources are sufficient. The management server sells a cloud resource of a cloud server based on the cloud service price, so that utilization of the cloud resource in the cloud server is improved.

With reference to FIG. 4a and FIG. 5, the following separately describes two manners in which the user equipment submits the plan information and the management server provides the available resource status information.

FIG. 4a is a schematic flowchart of another resource management method according to an embodiment of this application. The resource management method shown in FIG. 4a includes the following steps.

401: The user equipment submits the plan information to the management server.

The user equipment submits the plan information to the management server. The plan information is used to provide a cloud resource requirement plan of the user equipment for the management server. The plan information includes one or more of the following information: a cloud resource period requirement, a cloud resource capacity requirement, and a cloud resource flavor requirement. The type code of the cloud resource may represent a type of the cloud resource. For example, the type code G5 of the cloud resource represents a virtual machine with a 16-core processor, a 32G memory, and an RTX5000 graphics card.

In this embodiment of this application, the user equipment may submit the plan information in a plurality of manners. For example, the management server may submit the plan information through a UI interface of the management server, or may invoke, through an application programming interface API, a plan transaction module in the management server to submit the plan information. This is not specifically limited.

In an example of step 401, the plan information that the user equipment submits to the plan transaction module of the management server on March 30, 2022 includes: the user equipment applies for 100 virtual machines, a type of the virtual machines is G5, requirement start time is 0:00 in April 1, 2022, and end time is 24:00 in April 15, 2022.

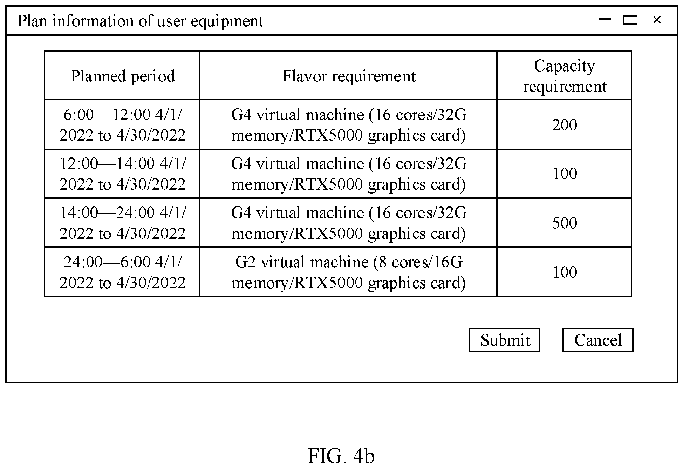

FIG. 4b is a diagram of a UI interface of a management server according to an embodiment of this application. In the example shown in FIG. 4b, the user equipment may submit the plan information of the user equipment through the UI interface of the management server. The plan information submitted by the user equipment includes cloud resource flavor requirements and cloud resource capacity requirements in different planned periods. For example, from 06:00 to 12:00 in April 1, 2022 to April 30, 2022, the cloud resource flavor requirement of the user equipment is G4 virtual machine, and the cloud resource capacity requirement is 200.

402: The plan transaction module of the management server obtains scheduling information of the cloud server cluster from the resource scheduling module.

The plan transaction module of the management server obtains the scheduling information of the cloud server cluster from the resource scheduling module. The scheduling information includes one or more of the following information: a submitted cloud resource plan, a cloud resource plan predicted based on a historical cloud resource change, a to-be-reserved idle cloud resource plan, a total cloud resource plan, a maximum cloud resource plan of a single device, and an in-use cloud resource continuation plan.

In this embodiment of this application, the plan transaction module of the management server may periodically query the scheduling information of the cloud server cluster from the resource scheduling module, or may be triggered, based on the plan information submitted by the user equipment, to query the scheduling information. Alternatively, the resource scheduling module may periodically report the scheduling information to the plan transaction module. This is not specifically limited.

403: The plan transaction module of the management server generates the available resource status information based on the scheduling information of the cloud server cluster.

The plan transaction module of the management server generates the available resource status information based on the scheduling information of the cloud server cluster. Specifically, the available resource status information generated by the plan transaction module of the management server based on the scheduling information includes one or more of the following: available cloud resource capacities or available cloud resource flavors in different future available periods.

For example, in an example of step 403, the available resource status information generated by the plan transaction module of the management server based on the scheduling information is: from 00:00 to 06:00 in April 1, 2022 to April 15, 2022, an available cloud resource capacity of a G4 virtual machine is 5000; and from 06:00 to 18:00 in April 1, 2022 to April 15, 2022, an available cloud resource capacity of the G4 virtual machine is 3000.

404: The plan transaction module of the management server generates cloud service price information based on the plan information and the available resource status information.

The plan transaction module of the management server generates the cloud service price information based on the plan information and the available resource status information. The cloud service price information includes a cloud service price corresponding to the plan information. Further, when the available resource status information meets the plan information, and the available cloud resource capacity in the available resource status information is greater than or equal to a first threshold, the management server generates cloud service discount information. In addition, the available cloud resource flavor in the available resource status information needs to be consistent with the cloud resource flavor requirement in the plan information.

In this embodiment of this application, the user equipment submits the plan information to the management server. Therefore, the management server can better calculate the available resource status information, and the management server may design more cloud service price discounts for the user equipment that submits the plan information.

405: The plan transaction module of the management server sends the cloud service price information to the user equipment.

The plan transaction module of the management server sends the cloud service price information to the user equipment. The cloud service price information includes the cloud service discount information corresponding to the plan information. Specifically, the management server may return the cloud service price information through a UI interface, and may send the cloud service price information through an application programming interface API. This is not specifically limited.

406: The user equipment sends subscription information to the management server.

After confirming the cloud service price information sent by the plan transaction module of the management server, the user equipment sends the subscription information to the plan transaction module. The subscription information is used to confirm the cloud service price information.

407: The plan transaction module of the management server sends the cloud resource plan corresponding to the subscription information to the resource scheduling module.

The plan transaction module of the management server sends the cloud resource plan corresponding to the subscription information to the resource scheduling module. The cloud resource plan indicates the resource scheduling module to execute a cloud resource allocation task for the cloud server cluster.

408: The resource scheduling module of the management server stores the cloud resource plan and reserves a required cloud resource.

The resource scheduling module of the management server stores the cloud resource plan and reserves the cloud resource required by the cloud resource plan.

409: The resource scheduling module of the management server sends a notification message to the user equipment.

The resource scheduling module of the management server sends the notification message to the user equipment. The notification message is used to notify the user equipment that the cloud resource is ready.

**In** this embodiment of this application, the management server may send the notification message to the user equipment in a manner of a message service, a messaging service, a mail service, a request invocation based on the hypertext transfer protocol HTTP, or the like. Content of the notification message may include a virtual machine ID, a container ID, or a bare metal physical ID that is applied for. This is not specifically limited.

410: When planned time arrives, the resource scheduling module of the management server notifies the cloud server cluster to allocate a corresponding cloud resource.

When start time of the cloud resource plan arrives, the resource scheduling module of the management server notifies the cloud server cluster to allocate the corresponding cloud resource. For example, the management server notifies the cloud server cluster to start a virtual machine or a container.

In this embodiment of this application, the management server receives the plan information submitted by the user equipment, and generates, based on the plan information submitted by the user equipment and an available resource status, the cloud service price corresponding to the plan information. The user equipment submits the cloud resource capacity requirement and the cloud resource flavor requirement in the future period in advance. Therefore, the management server can provide a more accurate cloud service price based on the plan information, improving cloud resource utilization.

FIG. 5 is a schematic flowchart of another resource management method according to an embodiment of this application. The resource management method shown in FIG. 5 includes the following steps.

501: A plan transaction module of a management server obtains scheduling information of a cloud server cluster from a resource scheduling module.

502: The plan transaction module of the management server generates available resource status information based on the scheduling information of the cloud server cluster.

Operations performed by the management server in step 501 and step 502 in this embodiment of this application are similar to the operations performed by the management server in step 402 and step 403 in the embodiment shown in FIG. 4a. Details are not described again.

503: The plan transaction module of the management server generates cloud service price information based on the available resource status information.

The plan transaction module of the management server generates the cloud service price information based on the available resource status information. Specifically, the plan transaction module of the management server may generate cloud service price information in different periods based on available cloud resource flavors in different future periods and corresponding available cloud resource capacities.

For example, in an example of step 503, the management server generates available cloud resource capacities in different periods and corresponding cloud service prices. For example, a quantity of G5 available virtual machines from 00:00 to 06:00 is 2000, and a cloud service price is 10 yuan per virtual machine; and a quantity of G5 available virtual machines from 06:00 to 18:00 is 1000, and a cloud service price is 20 yuan per virtual machine.

504: The user equipment queries the available resource status information and the corresponding cloud service price information.

The user equipment queries the available resource status information and a corresponding cloud service price. The user equipment may obtain available resource status information corresponding to a resource to be sold and a corresponding cloud service price through a UI interface or an API.

In this embodiment of this application, the management server may send all cloud service price information in the different periods to the user equipment. The user equipment selects a cloud resource period requirement, a cloud resource capacity requirement, and a cloud resource flavor requirement. It may be understood that, the cloud service price information queried by the user equipment at different moments is floating.

505: The user equipment sends subscription information to the management server.

The user equipment determines the subscription information based on the queried available resource status information and the corresponding cloud service price. The subscription information is used to confirm available resource status information corresponding to a resource selected by the user equipment for purchase and corresponding cloud service price information. The subscription information includes a cloud resource period requirement, a cloud resource capacity requirement, and a cloud resource flavor requirement corresponding to a resource that the user equipment confirms to subscribe to.

506: The plan transaction module of the management server submits a cloud resource corresponding to the subscription information to the resource scheduling module.

507: The resource scheduling module of the management server stores the cloud resource plan and reserves a required cloud resource.

508: The resource scheduling module of the management server sends a notification message to the user equipment.

509: When planned time arrives, the resource scheduling module of the management server notifies the cloud server cluster to allocate a corresponding cloud resource.

Operations performed by the management server in step 506 to step 509 in this embodiment of this application are similar to the operations performed by the management server in step 407 to step 410 in the embodiment shown in FIG. 4a. Details are not described again.

In this embodiment of this application, the management server may send, based on a query request sent by the user equipment, the available resource status information in the future period and the corresponding cloud service price information to the user equipment. The user equipment selects a cloud resource period requirement, a cloud resource flavor, and a cloud resource capacity corresponding to a resource that needs to be subscribed to, improving cloud resource utilization.

The foregoing describes the resource management method provided in embodiments of this application. The following describes a related apparatus provided in embodiments of this application with reference to the accompanying drawings.

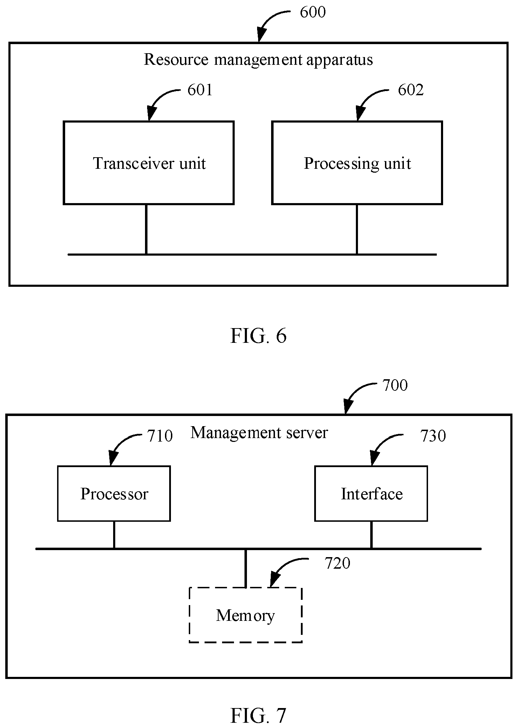

FIG. 6 is a diagram of a structure of a resource management apparatus according to an embodiment of this application. The apparatus is configured to implement the steps performed by the management server in the foregoing embodiments. As shown in FIG. 6, the resource management apparatus 600 includes a transceiver unit 601 and a processing unit 602.

The transceiver unit 601 is configured to obtain available resource status information of a cloud server cluster. The available resource status information includes one or more of the following: available cloud resource capacities and available cloud resource flavors of the cloud server cluster in different future periods. The processing unit 602 is configured to generate cloud service price information based on the available resource status information. The cloud service price information includes price information of cloud resources of a plurality of flavors. The transceiver unit 601 is further configured to send the cloud service price information to user equipment.

In a possible implementation, the transceiver unit 601 is further configured to receive plan information sent by the user equipment. The plan information is used to provide a cloud resource requirement plan of the user equipment for a management server. The plan information includes one or more of the following information: a cloud resource period requirement or a cloud resource flavor requirement. The processing unit 602 is specifically configured to generate the cloud service price information based on the plan information and the available resource status information.

In a possible implementation, the available cloud resource flavor in the available resource status information is consistent with the flavor requirement in the plan information.

In a possible implementation, the processing unit 602 is specifically configured to: when the available resource status information meets the plan information, and the available cloud resource capacity in the available resource status information is greater than or equal to a target threshold, generate cloud service discount information.

In a possible implementation, the transceiver unit 601 is further configured to receive subscription information sent by the user equipment. The subscription information is used to confirm the cloud service price information corresponding to the plan information.

In a possible implementation, the transceiver unit 601 is further configured to receive a query request sent by the user equipment. The processing unit 602 is further configured to send the available resource status information and the cloud service price information to the user equipment based on the query request.

In a possible implementation, the transceiver unit 601 is further configured to receive subscription information sent by the user equipment. The subscription information includes a cloud resource of at least one flavor selected by the user equipment and a price of the cloud resource of the at least one flavor.

In a possible implementation, the transceiver unit 601 is further configured to obtain scheduling information of the cloud server cluster. The scheduling information includes one or more of the following information: a submitted cloud resource plan, a cloud resource plan predicted based on a historical cloud resource change, a to-be-reserved idle cloud resource plan, a total cloud resource plan, a maximum cloud resource plan of a single device, and an in-use cloud resource continuation plan. The processing unit 602 is further configured to generate the available resource status information of the cloud server cluster based on the scheduling information.

It should be understood that division of units in the apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form in which the processing element invokes software.

It should be noted that, for ease of description, the foregoing method embodiments are described as a series of action combinations. However, a person skilled in the art should understand that this application is not limited by the described action sequence.

Another appropriate step combination that can be figured out by a person skilled in the art based on the content described above also falls within the protection scope of this application. In addition, a person skilled in the art should also be familiar with that embodiments described in this specification all belong to preferred embodiments, and the involved actions are not necessarily required by this application.

FIG. 7 is a diagram of a structure of a management server according to an embodiment of this application. As shown in FIG. 7, the management server 700 includes a processor 710, a memory 720, and an interface 730. The processor 710, the memory 720, and the interface 730 are coupled through a bus (not marked in the figure). The memory 720 stores instructions. When execution instructions in the memory 720 are executed, the management server 700 performs the method performed by the management server in the foregoing method embodiments.

The management server 700 may be one or more integrated circuits configured to implement the foregoing method, for example, one or more application-specific integrated circuits (application-specific integrated circuits, ASICs), one or more microprocessors (digital signal processor, DSP), one or more field programmable gate arrays (field programmable gate arrays, FPGAs), or a combination of at least two of these integrated circuit forms. For another example, when the unit in the apparatus may be implemented in a form in which the processing element schedules a program, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

The processor 710 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The memory 720 may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to a data bus, the bus may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

It may be understood that the resource management apparatus 600 shown in FIG. 6 and the management server 700 shown in FIG. 7 in embodiments of this application may be the management server 101 in the system architecture shown in FIG. 1.

In another embodiment of this application, a computer-readable storage medium is further provided. The computer-readable storage medium stores computer-executable instructions. When a processor of a device executes the computer-executable instructions, the device performs the method performed by the management server in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the management server in the foregoing method embodiment.

It may be clearly understood by a person skilled in the art that, for the purpose of convenient and brief description, for a detailed operating process of the foregoing systems, apparatuses, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A resource management method, comprising:
obtaining available resource status information of a cloud server cluster, wherein the available resource status information comprises one or more of the following: available cloud resource capacities and available cloud resource flavors of the cloud server cluster in different future periods;
generating cloud service price information based on the available resource status information, wherein the cloud service price information comprises price information of cloud resources of a plurality of flavors; and
sending the cloud service price information to user equipment.

2. The method according to claim 1, wherein before the obtaining available resource status information of a cloud server cluster, the method further comprises:
receiving plan information sent by the user equipment, wherein the plan information is used to provide a cloud resource requirement plan of the user equipment for a management server, and the plan information comprises one or more of the following information: a cloud resource period requirement or a cloud resource flavor requirement; and
the generating cloud service price information based on the available resource status information comprises:
generating the cloud service price information based on the plan information and the available resource status information.

3. The method according to claim 2, wherein the available cloud resource flavor in the available resource status information is consistent with the flavor requirement in the plan information.

4. The method according to claim 2 or 3, wherein the generating the cloud service price information based on the plan information and the available resource status information comprises:
when the available resource status information meets the plan information, and the available cloud resource capacity in the available resource status information is greater than or equal to a target threshold, generating cloud service discount information.

5. The method according to any one of claims 1 to 4, wherein after the sending the cloud service price information to user equipment, the method further comprises:
receiving subscription information sent by the user equipment, wherein the subscription information is used to confirm the cloud service price information corresponding to the plan information.

6. The method according to claim 1, wherein before the sending the cloud service price information to user equipment, the method further comprises:
receiving a query request sent by the user equipment; and
sending the available resource status information and the cloud service price information to the user equipment based on the query request.

7. The method according to claim 6, wherein after the sending the available resource status information and the cloud service price information to the user equipment based on the query request, the method further comprises:
receiving subscription information sent by the user equipment, wherein the subscription information comprises a cloud resource of at least one flavor selected by the user equipment and a price of the cloud resource of the at least one flavor.

8. The method according to any one of claims 1 to 7, wherein the obtaining available resource status information of a cloud server cluster comprises:
obtaining scheduling information of the cloud server cluster, wherein the scheduling information comprises one or more of the following information: a submitted cloud resource plan, a cloud resource plan predicted based on a historical cloud resource change, a to-be-reserved idle cloud resource plan, a total cloud resource plan, a maximum cloud resource plan of a single device, and an in-use cloud resource continuation plan; and
generating the available resource status information of a cloud server based on the scheduling information.

9. A resource management apparatus, comprising:
a transceiver unit, configured to obtain available resource status information of a cloud server cluster, wherein the available resource status information comprises one or more of the following: available cloud resource capacities and available cloud resource flavors of the cloud server cluster in different future periods; and
a processing unit, configured to generate cloud service price information based on the available resource status information, wherein the cloud service price information comprises price information of cloud resources of a plurality of flavors, wherein
the transceiver unit is further configured to send the cloud service price information to user equipment.

10. The apparatus according to claim 9, wherein the transceiver unit is further configured to receive plan information sent by the user equipment, the plan information is used to provide a cloud resource requirement plan of the user equipment for a management server, and the plan information comprises one or more of the following information: a cloud resource period requirement or a cloud resource flavor requirement; and
the processing unit is specifically configured to generate the cloud service price information based on the plan information and the available resource status information.

11. The apparatus according to claim 10, wherein the available cloud resource flavor in the available resource status information is consistent with the flavor requirement in the plan information.

12. The apparatus according to claim 10 or 11, wherein the processing unit is specifically configured to:
when the available resource status information meets the plan information, and the available cloud resource capacity in the available resource status information is greater than or equal to a target threshold, generate cloud service discount information.

13. The apparatus according to any one of claims 9 to 12, wherein the transceiver unit is further configured to:
receive subscription information sent by the user equipment, wherein the subscription information is used to confirm the cloud service price information corresponding to the plan information.

14. The apparatus according to claim 9, wherein the transceiver unit is further configured to receive a query request sent by the user equipment; and
the processing unit is further configured to send the available resource status information and the cloud service price information to the user equipment based on the query request.

15. The apparatus according to claim 14, wherein the transceiver unit is further configured to:
receive subscription information sent by the user equipment, wherein the subscription information comprises a cloud resource of at least one flavor selected by the user equipment and a price of the cloud resource of the at least one flavor.

16. The apparatus according to any one of claims 9 to 15, wherein the transceiver unit is further configured to:
obtain scheduling information of the cloud server cluster, wherein the scheduling information comprises one or more of the following information: a submitted cloud resource plan, a cloud resource plan predicted based on a historical cloud resource change, a to-be-reserved idle cloud resource plan, a total cloud resource plan, a maximum cloud resource plan of a single device, and an in-use cloud resource continuation plan; and
the processing unit is further configured to generate the available resource status information of the cloud server cluster based on the scheduling information.

17. A management server, comprising a processor, wherein the processor is coupled to a memory, the memory is configured to store instructions, and when the instructions are executed by the processor, the management server is enabled to perform the method according to any one of claims 1 to 8.

18. A computer-readable storage medium, wherein the computer-readable storage medium stores instructions, and when the instructions are executed, a computer is enabled to perform the method according to any one of claims 1 to 8.

19. A computer program product, wherein the computer program product comprises instructions, and when the instructions are executed, a computer is enabled to implement the method according to any one of claims 1 to 8.
